(19) Europäisches Patentamt
European Patent Office
Office européen des brevets

(11) EP 1 104 992 B2

(12) NEUE EUROPÄISCHE PATENTSCHRIFT
Nach dem Einspruchsverfahren

(45) Veröffentlichungstag und Bekanntmachung des Hinweises auf die Entscheidung über den Einspruch:
**21.09.2011 Patentblatt 2011/38**

(45) Hinweis auf die Patenterteilung:
**09.03.2005 Patentblatt 2005/10**

(21) Anmeldenummer: **99941559.9**

(22) Anmeldetag: **10.08.1999**

(51) Int Cl.:
***A01N 57/20*** (2006.01) *A01N 57/20* (2006.01)
*A01N 47/36* (2006.01) *A01N 47/30* (2006.01)
*A01N 43/824* (2006.01) *A01N 43/653* (2006.01)
*A01N 43/50* (2006.01) *A01N 43/40* (2006.01)
*A01N 39/04* (2006.01) *A01N 39/02* (2006.01)
*A01N 37/40* (2006.01) *A01N 37/32* (2006.01)
*A01N 33/18* (2006.01)

(86) Internationale Anmeldenummer:
**PCT/EP1999/005801**

(87) Internationale Veröffentlichungsnummer:
**WO 2000/008940 (24.02.2000 Gazette 2000/08)**

(54) **HERBIZIDE MITTEL FÜR TOLERANTE ODER RESISTENTE GETREIDEKULTUREN**

HERBICIDES FOR TOLERANT OR RESISTANT CEREAL CULTURES

AGENTS HERBICIDES POUR CULTURES DE CEREALES TOLERANTES OU RESISTANTES

(84) Benannte Vertragsstaaten:
**AT BE CH CY DE DK ES FI FR GB GR IE IT LI LU MC NL PT SE**

(30) Priorität: **13.08.1998 DE 19836700**

(43) Veröffentlichungstag der Anmeldung:
**13.06.2001 Patentblatt 2001/24**

(73) Patentinhaber: **Bayer CropScience AG**
**40789 Monheim (DE)**

(72) Erfinder:
- **HACKER, Erwin**
  **D-65239 Hochheim (DE)**
- **BIERINGER, Hermann**
  **D-65817 Eppstein (DE)**
- **WILLMS, Lothar**
  **D-65719 Hofheim (DE)**

(56) Entgegenhaltungen:

| | |
|---|---|
| **EP-A- 0 492 367** | **EP-A1- 0 499 798** |
| **WO-A-92/08353** | **WO-A-95/05082** |
| **WO-A-97/36488** | **WO-A-98/07319** |
| **WO-A-98/09525** | **WO-A-98/24320** |
| **WO-A1-00/08940** | **WO-A1-92/09608** |
| **WO-A1-96/41537** | **WO-A1-97/10714** |
| **DE-A- 2 856 260** | |

- **DATABASE CROPU [Online] Derwent International 1998 : "Guideline on good plant protection practice. Wheat." retrieved from STN Database accession no. 1998-90329 XP002126968 & BULL.OEPP (27, NO. 2-3, 311-37, 1997) CODEN: OEPBAO,**
- **CHEMICAL ABSTRACTS, vol. 124, no. 8, 19. Februar 1996 (1996-02-19) Columbus, Ohio, US; abstract no. 79363, DEEGE, R ET AL: "BAY FOE 5043: A new low rate herbicide for preemergence grass control in corn, cereals, soybeans and other selected crops" XP002126964 & BRIGHTON CROP PROT. CONF.--WEEDS (1995), (VOL. 1), 43-8 ,**
- **DATABASE CROPU [Online] Derwent Interantional 1996 TEANEY S R ET AL: "DPX - KE459 - a new sulfonylurea for postemergence grass and broadleaf weed control in cereals." retrieved from STN Database accession no. 1996-80683 XP002126969 & PROC.BR.CROP PROT.CONF.WEEDS (1, 49-56, 1995) 2 FIG. 3 TAB. 2 REF. CODEN: PBCWDF, Du-Pont**
- **CHEMICAL ABSTRACTS, vol. 124, no. 9, 26. Februar 1996 (1996-02-26) Columbus, Ohio, US; abstract no. 109624, PARRISH, S K ET AL: "MON 37500: A new selective herbicide to control annual and perennial weeds in wheat" XP002126965 & BRIGHTON CROP PROT. CONF.--WEEDS (1995), (VOL. 1), 57-63 ,**
- **CHEMICAL ABSTRACTS, vol. 130, no. 1, 4. Januar 1999 (1999-01-04) Columbus, Ohio, US; abstract no. 1299, ADAMCZEWSKI, KAZIMIERZ ET AL: "The weed control efficacy of carfentrazone ethyl in winter cereals" XP002126966 & PROG. PLANT PROT. (1997), 37(2), 213-216 ,**



Printed by Jouve, 75001 PARIS (FR)

(Forts. nächste Seite)

- **CHEMICAL ABSTRACTS, vol. 124, no. 9, 26. Februar 1996 (1996-02-26) Columbus, Ohio, US; abstract no. 109631, MURATA, S ET AL: "Mechanisms of selective action of the peroxidizing herbicide ET-751 on wheat and Galium aparine" XP002126967 & BRIGHTON CROP PROT. CONF.--WEEDS (1995), (VOL. 1), 243-8 ,**
- **DATABASE CROPU [Online] Derwent International BROWN H M ET AL: "The impact of sulfonylurea herbicides in cereal crops." retrieved from STN Database accession no. 1996-81449 XP002126970 & PROC.BR.CROP PROT.CONF.WEEDS (3, 1143-52, 1995) 7 TAB. 15 REF., Du-Pont**
- **DATABASE CROPU [Online] Derwent International GAUVRIT C: "Mode of Action of Herbicides Used in Wheat Crops. (Mode d'Action des Herbicides Utilises en Culture de Ble)" retrieved from STN Database accession no. 1992-81307 XP002126971 & PHYTOMA DEF.VEG. (1992, NO. 435, 38-42) 6 FIG. 5 REF.,**
- **C TOMLIN (ED): "The Pesticide Manual, Tenth Edition" , FARNHAM, GB XP002099499 ISBN: 0-948404-79-5 Seite 1335 -Seite 1341**


Bemerkungen:

Die Akte enthält technische Angaben, die nach dem Eingang der Anmeldung eingereicht wurden und die nicht in dieser Patentschrift enthalten sind.

## Beschreibung

Die Erfindung liegt auf dem Gebiet der Pflanzenschutzmittel. die gegen Schadpflanzen in toleranten oder resistenten Kulturen von Getreide eingesetzt werden können und als Herbizidwirkstoffe eine Kombination von zwei oder mehreren Herbiziden enthalten. Im folgenden wird der Begriff Getreide im engeren Sinne gebraucht und betrifft nur die Getreidekulturen von Weizen, Gerste, Roggen, Hafer und entsprechende spezielle Varianten wie Triticale. Der Begriff soll hierbei nicht Reis oder Mais umfassen.

Mit der Einführung von toleranten oder resistenten Getreidesorten und -linien, insbesondere von transgenen Getreidesorten und -linien, wird das herkömmliche Unkrautbekämpfungssystem um neue, per se in herkömmlichen Getreidesorten nichtselektive Wirkstoffe ergänzt. Die Wirkstoffe sind beispielsweise die bekannte breitwirksame Herbizide wie Glyphosate, Sulfosate, Glufosinate, Bialaphos und Imidazofinon-Herbizide [Herbizide (A)], die nunmehr in den jeweils für sie entwickelten toleranten Kulturen eingesetzt werden können. Die Wirksamkeit dieser Herbizide gegen Schadpflanzen in den toleranten Kulturen liegt auf einem hohen Niveau, hängt jedoch - ähnlich wie bei anderen Herbizidbehandlungen - von der Art des eingesetzten Herbizids, dessen Aufwandmenge, der jeweiligen Zubereitungsform, den jeweils zu bekämpfenden Schadpflanzen, den Klima- und Bodenverhältnissen, etc. ab. Ferner weisen die Herbizide Schwächen (Lücken) gegen spezielle Arten von Schadpflanzen auf. Ein weiteres Kriterium ist die Dauer der Wirkung bzw. die Abbaugeschwindigkeit des Herbizids. Zu berücksichtigen sind gegebenenfalls auch Veränderungen in der Empfindlichkeit von Schadpflanzen, die bei längerer Anwendung der Herbzide oder geographisch begrenzt auftreten können.

Wirkungsverluste bei einzelnen Pflanzen lassen sich nur bedingt, wenn überhaupt, durch höhere Aufwandmengen der Herbizide ausgleichen. Außerdem besteht immer Bedarf für Methoden, die Herbizidwirkung mit geringerer Aufwandmenge an Wirkstoffen zu erreichen. Eine geringere Aufwandmenge reduziert nicht nur die für die Applikation erforderliche Menge eines Wirkstoffs, sondern reduziert in der Regel auch die Menge an nötigen Formulierungshilfsmitteln. Beides verringert den wirtschaftlichen Aufwand und verbessert die ökologische Verträglichkeit der Herbizidbehandlung.

Eine Möglichkeit zur Verbesserung des Anwendungsprofils eines Herbizids kann in der Kombination des Wirkstoffs mit einem oder mehreren anderen Wirkstoffen bestehen, welche die gewünschten zusätzlichen Eigenschaften beisteuern. Allerdings treten bei der kombinierten Anwendung mehrerer Wirkstoffe nicht selten Phänomene der physikalischen und biologischen Unverträglichkeit auf, z. B. mangelnde Stabilität einer Coformulierung, Zersetzung eines Wirkstoffes bzw. Antagonismus der Wirkstoffe. Erwünscht dagegen sind Kombinationen von Wirkstoffen mit günstigem Wirkungsprofil, hoher Stabilität und möglichst synergistisch verstärkter Wirkung, welche eine Reduzierung der Aufwandmenge im Vergleich zur Einzefapplikation der zu kombinierenden Wirkstoffe erlaubt.

Überraschenderweise wurde nun gefunden, daß Wirkstoffe aus der Gruppe der genannten breitwirksamen Herbizide (A) in Kombination mit bestimmten Herbiziden (B) in besonders günstiger Weise zusammenwirken, wenn sie in den Getreidekulturen eingesetzt werden, die für die selektive Anwendung der erstgenannten Herbizide geeignet sind.

Gegenstand der Erfindung ist somit die Verwendung von Herbizid-Kombinationen zur Bekämpfung von Schadpflanzen in Getreidekulturen, dadurch gekennzeichnet, daß die jeweilige Herbizid-Kombination einen synergistisch wirksamen Gehalt an

(A) einem breitwirksamen Herbiziden aus der Gruppe der Verbindungen, welche aus Verbindungen der Formeln (A1),

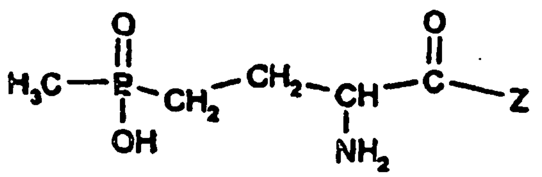

(A1)

worin Z einen Rest der Formel -OH oder einen Peptidrest der Formel $-NHCH(CH_3)CONHCH(CH_3)COOH$ bedeutet, und deren Salzen
besteht,
und
(B) einem Herbizid aus der Gruppe der Verbindungen, welche aus

(B1) selektiv in Getreide besonders gegen monokotyle Schadpflanzen wirksamen Herbiziden mit Blattwirkung und/oder Bodenwirkung (Residualwirkung) aus der Gruppe Isoproturon, Fluthiamide, Prosulfocarb, Pendimethalin, Fenoxaprop-P, Fenoxaprop, Clodinafop, Diclofop, und Flupyrsulfuron,
(B2) selektiv in Getreide gegen monokotyle und dikotyle Schadpflanzen wirksamen Herbiziden mit überwiegend Blattwirkung aus der Gruppe Metsulfuron, und Sulfosulfuron und
(B3) selektiv in Getreide gegen Dikotyle und Monokotyle wirksamen Herbiziden mit Blatt- und Bodenwirkung aus der Gruppe Diflufenican / Flurtamone, Metosulam und Flumetsulam und
(B4) selektiv in Getreide gegen monokotyle und dikotyle Schadpflanzen wirksamen Herbiziden mit Blattwirkung aus der Gruppe

(B4.1) Tribenuron, Thifensulfuron, Prosulfuron und Cinidon-ethyl und
(B4.2) Herbizide vom Wuchsstofftyp aus der Gruppe 2,4-D, CMPP-P, Dichlorprop, MCPA, Fluroxypyr, Dicamba, Bentazone und Clopyralid und
(B4.3) Hydroxybenzonitrile / Photosynthesehemmer aus der Gruppe Bromoxynil, loxynil, und Metribuzin und
(B4.4) PPO-Hemmer aus der Gruppe Carfentrazone(-ethyl), Pyraflufen und Fluoroglycofen und
(B4.5) HPPDO-Hemmer aus der Gruppe Picolinafen, Aclonifen, Isoxaflutole, Clomazone, Sulcotrione und Mesotrione

besteht.

Neben den erfindungsgemäß verwendeten Herbizid-Kombinationen können weitere Pflanzenschutzmitteiwirkstoffe und im Pflanzenschutz übliche Hilfsstoffe und Formulierungshilfsmittel verwendet werden.

Die synergistischen Wirkungen werden bei gemeinsamer Ausbringung der Wirkstoffe (A) und (B) beobachtet, können jedoch auch bei zeitlich getrennter Anwendung (Splitting) festgestellt werden. Möglich ist auch die Anwendung der Herbizide oder der Herbizid-Kombinationen in mehreren Portionen (Sequenzanwendung), z. B. nach Anwendungen im Vorauflauf, gefolgt von Nachauflauf-Applikationen oder nach frühen Nachauflaufanwendungen, gefolgt von Applikationen im mittleren oder späten Nachauflauf. Bevorzugt ist dabei die simultane Anwendung der Wirkstoffe der jeweiligen Kombination, gegebenenfalls in mehreren Portionen. Aber auch die zeitversetzte Anwendung der Einzelwirkstoffe einer Kombination ist möglich und kann im Einzelfall vorteilhaft sein. In diese Systemanwendung können auch andere Pflanzenschutzmittel wie Fungizide, Insektizide, Akarizide etc. und/oder verschiedene Hilfsstoffe, Adjuvantien und/oder Düngergaben integriert werden.

Die synergistischen Effekte erlauben eine Reduktion der Aufwandmengen der Einzelwirkstoffe, eine höhere Wirkungsstärke gegenüber derselben Schadpflanzenart bei gleicher Aufwandmenge, die Kontrolle bislang nicht erfasster Arten (Lücken), eine Ausdehnung des Anwendungszeitraums und/oder eine Reduzierung der Anzahl notwendiger Einzelanwendungen und - als Resultat für den Anwender - ökonomisch und ökologisch vorteilhaftere Unkrautbekämpfungssysteme.

Bespielsweise werden durch die erfindungsgemäß verwendeten Kombinationen aus (A)+(B) synergistische Wirkungssteigerungen möglich, die weit und in unerwarteter Weise über die Wirkungen hinausgehen, die mit den Einzelwirkstoffen (A) und (B) erreicht werden.

in WO-A-98109525 ist bereits ein Verfahren zur Bekämpfung von Unkräutern in transgenen Kulturen beschrieben, welche gegenüber phosphorhaltigen Herbiziden wie_ Glufosinate oder Glyphosate resistent sind, wobei Herbizid-Kombinationen eingesetzt werden, welche Glufosinate oder Glyphosate und mindestens ein Herbizid aus der Gruppe Prosulfuron, Primisulfuron, Dicamba, Pyridate, Dimethenamid, Metolachlor, Flumeturon, Propaquizafop, Atrazin, Clodinafop, Norflurazone, Ametryn, Terbutylazin, Simazin, Prometryn, NOA-402989 (3-Phenyl-4-hydroxy-6-chlorpyridazin), eine Verbindung der Formel

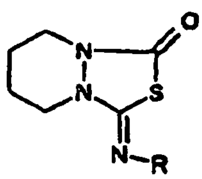

worin R = 4-Chlor-2-fluor-5-(methoxycarbonylmethylthio)-phenyl bedeutet, (bekannt aus US-A-4671819), CGA276854 = 2-Chlor-5-(3-methyl-2,6-dioxo-4-trifluormethyl-3,6-dihydro-2H-pyrimidin-1-yl)-benzoesäure-1-allyloxycarbonyl-1-methylethyl-ester (= WC9717, bekannt aus US-A-5183492) und 2-{N-[N-(4,6-Dimethylpyrimidin-2-yl)-aminocarbonyl]-aminosulfonyl}-benzoesäure-4-oxetanylester (bekannt aus EP-A-496701) enthalten.
Einzelheiten über die erzielbaren oder erzielten Effekte gehen aus der Druckschrift WO-A-98/09525 nicht hervor. Beispiele zu synergistischen Effekten oder zur Durchführung des Verfahrens in bestimmten Kulturen fehlen ebenso wie

konkrete Kombinationen aus zwei, drei oder weiteren Herbiziden.

Aus DE-A-2856260 sind bereits einige Herbizid-Kombinationen mit Glufosinate oder L-Glufosinate und anderen Herbiziden wie Alloxidim, Linuron, MCPA, 2,4-D, Dicamba, Tridopyr, 2,4,5-T, MCPB und anderen bekannt.

Aus WO-A-92108353 und EP-A 0 252 237sind bereits einige Herbizid-Kombinationen mit Glufosinate oder Glyphosate und anderen Herbiziden aus der Sulfonylhamstoffreihe wie Metsulfuron-methyl, Nicosulfuron, Primisulfuron, Rimsulfuron u.a. bekannt

Die Anwendung der Kombinationen zur Bekämpfung von Schadpflanzen ist in den Druckschriften nur an wenigen Pflanzenspezies oder aber an keinem Beispiel gezeigt worden.

In eigenen Versuchen wurde gefunden, daß überraschenderweise große Unterschiede zwischen der Verwendbarkeit der in WO-A-98/09525 und den anderen Druckschriften erwähnten Herbizid-Kombinationen und auch anderer neuartiger Herbizid-Kombinationen in Pflanzenkulturen bestehen.
Erfindungsgemäß werden Herbizid-Kombinationen verwendet, die in toleranten Getreidekulturen besonders günstig eingesetzt werden können.

Die Verbindungen der Formel (A1) sind bekannt oder können analog bekannten Verfahren hergestellt werden.

Die Formel (A1) umfaßt alle Stereoisomeren und deren Gemische, insbesondere das Racemat und das jeweils biologisch wirksame Enantiomere, z. B. L-Glufosinate und dessen Salze. Beispiele für Wirkstoffe der Formel (A1) sind folgende:

(A1.1) Glufosinate im engeren Sinne, d. h. D,L-2-Amino-4-[hydroxy(methyl)phosphinyl]-butansäure,
(A1.2) Glufosinate-monoammoniumsalz,
(A1.3) L-Glufosinate, L- oder (2S)-2-Amino-4-[hydroxy(methyl)phosphinyl]-butansäure (Phosphinothricin)
(A1.4) L-Glufosinate-monoammoniumsalz,
(A1.5) Bialaphos (oder Bilanafos), d.h. L-2-Amino-4-[hydroxy(methyl)phosphinyl]-butanoyl-L-alanyl-L-alanin, insbesondere dessen Natriumsalz.

Die genannten Herbizide (A1.1) bis (A1.5) werden über die grünen Teile der Pflanzen aufgenommen und sind als Breitspektrum-Herbizide oder Totalherbizide bekannt; sie sind Hemmstoffe des Enzyms Glutaminsynthetase in Pflanzen; siehe "The Pesticide Manual" 11th Edition, British Crop Protection Council 1997, S. 643-645 bzw. 120-121. Während ein Einsatzgebiet im Nachauflauf-Verfahren zur Bekämpfung von Unkräutern und Ungräsern in Plantagen-Kulturen und auf Nichtkulturland sowie mittels spezieller Applikationstechniken auch zur Zwischenreihenbekämpfung in landwirtschaftlichen Flächenkulturen wie Mais, Baumwolle u.a. besteht, nimmt die Bedeutung der Verwendung als selektive Herbizide in resistenten transgenen Pflanzenkulturen zu. Glufosinate wird üblicherweise in Form eines Salzes, vorzugsweise des Ammoniumsalzes eingesetzt. Das Racemat von Glufosinate bzw. Glufosinate-ammonium wird alleine üblicherweise in Dosierungen ausgebracht, die zwischen 50 und 2000 g AS/ha, meist 200 und 2000 g AS/ha (= g a.i./ha = Gramm Aktivsubstanz pro Hektar) liegen. Glufosinate ist in diesen Dosierungen vor allem dann wirksam, wenn es über grüne Pflanzenteile aufgenommen wird. Da es im Boden mikrobiell innerhalb weniger Tage abgebaut wird, hat es keine Dauerwirkung im Boden. Ähnliches gilt auch für den verwandten Wirkstoff Bialaphos-Natrium (auch Bilanafos-Natrium); siehe "The Pesticide Manual" 11th Ed., British Crop Protection Council 1997 S. 120-121.
In den erfindungsgemäß verwendeten Kombinationen benötigt man in der Regel deutlich weniger Wirkstoff (A1), beispielsweise eine Aufwandmenge im Bereich von 20 bis 800, vorzugsweise 20 bis 600 Gramm Aktivsubstanz Glufosinate pro Hektar (g AS/ha oder g a.i./ha). Entsprechende Mengen, vorzugsweise in Mol pro Hektar umgerechnete Mengen, gelten auch für Glufosinate-ammonium und Bialafos bzw. Bialafos-Natrium.

Die Kombinationen mit dem blattwirksamen Herbiziden (A1) werden zweckmäßig in Getreidekulturen eingesetzt, die gegenüber den Verbindungen (A1) resistent oder tolerant sind. Einige tolerante Getreidekulturen, die gentechnisch erzeugt wurden, sind bereits bekannt und werden in der Praxis eingesetzt; vgl. Artikel in der Zeitschrift "Zuckerrübe" 47. Jahrgang (1998), S. 217 ff.; zur Herstellung transgener Pflanzen, die gegen Glufosinate resistent sind, vgl. EP-A-0242246, EP-A-242236, EP-A-257542, EP-A-275957, EP-A-0513054).

Als Kombinationspartner (B) kommen Verbindungen der Untergruppen (B1) bis (B4) in Frage, bestehend aus

(B1) selektiv in Getreide besonders gegen monokotyle Schadpflanzen wirksamen Herbiziden mit Blattwirkung und/ oder Bodenwirkung (Residualwirkung),

vorzugsweise in einer Menge von 50-8000, insbesondere 50-6000 g AS/ha, aus der Gruppe (B1.1) der Verbindungen mit Blatt- und Bodenwirkung, aus der Gruppe

(B1.1.1) Isoproturon (PM, S. 732-734), vorzugsweise in einer Menge von 250-5000, insbesondere 500-3000 g AS/ha,
(B1.1.3) Fluthiamid, Fluthiamide (BAY FOE 5043) (PM, S. 82-83), vorzugsweise in einer Menge von

50-3000, insbesondere 80-2000 g AS/ha,

(B1.1.4) Prosulfocarb (PM, S. 1039-1041), vorzugsweise in einer Menge von 100-5000, insbesondere 500-600 g AS/ha, und/oder

(B1.1.5) Pendimethalin (PM, S. 937-939), vorzugsweise in einer Menge von 250-5000, insbesondere 500-1500 g AS/ha, und/oder

(B1.2) Verbindungen mit überwiegend Blattwirkung aus der Gruppe

(B1.2.1) Fenoxaprop-P (PM, S. 519-520), vorzugsweise Fenoxaprop-Pethyl, auch in Form der Gemische mit dem anderen optischen Isomeren, z. B. in Form des racemischen Gemischs Fenoxapropethyl, insbesondere der Wirkstoff in Gegenwart eines Safeners wie Fenchlorazol-ethyl oder Mefenpyr-diethyl, vorzugsweise in einer Menge von 20-300, insbesondere 30-200 g AS/ha,

(B1.2.2) Clodinafop (PM, S. 251-253), vorzugsweise Clodinafop-propargyl insbesondere in Gegenwart eines Safeners wie Cloquintocetmexyl, vorzugsweise in einer Menge von 10-150, insbesondere 20-100 g AS/ha,

(B1.2.3) Diclofop, vorzugsweise Diclofop-methyl (PM, S. 374-377), vorzugsweise in einer Menge von 100-3000, insbesondere 500-2000 g AS/ha,

(B1.2.6) Flupyrsulfuron und dessen Salze und Ester wie Flupyrsulfuronmethyl-natrium (PM, S. 586-588), vorzugsweise in einer Menge von 1-100, insbesondere 2-90 g AS/ha, und/oder

(B2) selektiv in Getreide gegen monokotyle und dikotyle Schadpflanzen wirksamen Herbiziden mit überwiegend Blattwirkung, vorzugsweise in einer Menge von 0,1-150, insbesondere 1-120 g AS/ha aus der Gruppe

(B2.1) Metsulfuron und dessen Ester und Salze, vorzugsweise Metsulfuron-methyl, (PM, S. 842-844), vorzugsweise in einer Menge von 1-20, insbesondere 2-15 g AS/ha,

(B2.6) Sulfosulfuron (MON 37500) (PM, S.1130-1131 ), vorzugsweise in einer Menge von 5-150, insbesondere 10-120 g AS/ha, und/oder

(B3) selektiv in Getreide gegen Dikotyle und Monokotyle, hauptsächlich gegen Dikotyle wirksame Herbizide mit Blatt- und Bodenwirkung, vorzugsweise in einer Menge von 10-5000, insbesondere 15-300 g AS/ha aus der Gruppe

(B3.1) Diflufenican (PM, S.397-399) / Flurtamone (PM, S.602-603), vorzugsweise in einer Menge von 10-500, insbesondere 15-300 g AS/ha,

(B3.2) Metosulam (PM, S.836-838) und/oder

(B3.3) Flumetsulam (PM, S. 573-574) und/oder

(B4) selektiv in Getreide gegen monokotyle und dikotyle Schadpflanzen, hauptsächlich gegen dikotyle Schadpflanzen wirksame Herbizide mit vornehmlicher Blattwirkung, vorzugsweise in einer Menge von 250-5000, insbesondere 500-3000 g AS/ha, aus der Gruppe

(B4.1) aus der Gruppe der Acetolactatsynthasehemmer, vorzugsweise in einer Menge von 1-250, insbesondere 5-150 g AS/ha, aus der Gruppe

(B4.1.1) Tribenuron und deren Ester, insbesondere der Methylester (PM, S.1230-1232), vorzugsweise in einer Menge von 2-80, insbesondere 3-60 g AS/ha,

(B4.1.4) Thifensulfuron und dessen Ester, insbesondere der Methylester (PM, S.1188-1190), vorzugsweise in einer Menge von 2-120, insbesondere 5-90 g AS/ha,

(84.1.5) Prosulfuron (PM, S. 1141-1143), vorzugsweise in einer Menge von 1-100, insbesondere 5-80 g AS/ha, und/oder

(B4.1.6) Cinidon-ethyl (BAS 615005, vgl. AG Chem New Compound Review Vol. 17 (1999), Seite 26), vorzugsweise in einer Menge von 5-500, insbesondere 10-400 g AS/ha, und/oder

(B4.2) aus der Gruppe der Herbizide vom Wuchsstofftyp, vorzugsweise in einer Menge von 10-5000, insbesondere 20-300 g AS/ha, aus der Gruppe

(B4.2.1) 2,4-D (PM, S. 323-327) und dessen Ester und Salze, vorzugsweise in einer Menge von 250-5000, insbesondere 500-3000 g AS/ha,

(B4.2.2) CMPP-P (PM, S. 260-263) und dessen Ester und Salze, vorzugsweise in einer Menge von

250-5000, insbesondere 500-3000 g AS/ha,
(B4.2.3) DP = Dichlorprop und dessen Ester (PM, S. 368-370), vorzugsweise in einer Menge von 250-5000, insbesondere 500-3000 g AS/ha,
(B4.2.4) MCPA (PM, S. 267-269) und dessen Salze und Ester, vorzugsweise in einer Menge von 250-5000, insbesondere 500-3000 g AS/ha,
(84.2.5) Fluroxypyr (PM, S. 597-600) und dessen Salze und Ester, vorzugsweise in einer Menge von 10-300, insbesondere 50-200 g AS/ha,
(B4.2.6) Dicamba (PM, S. 260-263) und dessen Salze und Ester, vorzugsweise in einer Menge von 10-300, insbesondere 50-200 g AS/ha,
(B4.2.8) Bentazone (PM, S. 109-111), vorzugsweise in einer Menge von 100-5000, insbesondere 500-3000 g AS/ha, und/oder
(B4.2.9) Clopyralid und dessen Salze und Ester (PM, S. 260-263), vorzugsweise in einer Menge von 10-2000, insbesondere 20-1000 g AS/ha,

(B4.3) aus der Gruppe der Hydroxybenzonitrile / Photosynthesehemmer, vorzugsweise in einer Menge von 50-5000, insbesondere 60-3000 g AS/ha, aus der Gruppe g AS/ha, aus der Gruppe

(B4.3.1) Bromoxynil (PM, S. 159-151) und dessen Salze und Ester, vorzugsweise in einer Menge von 50-1000, insbesondere 150-800 g AS/ha,
(B4.3.2) loxynil (PM, S. 718-721) und dessen Salze und Ester, vorzugsweise in einer Menge von 50-1000, insbesondere 150-800 g AS/ha,
(B4.3.4) Metribuzin (PM, S. 840-841 ), vorzugsweise in einer Menge von 50-3000, insbesondere 60-2000 g AS/ha, und/oder

(B4.4) aus der Gruppe der PPO-Hemmer, vorzugsweise in einer Menge von 1-150, insbesondere 2-120 g AS/ha, aus der Gruppe

(B4.4.1) Carfentrazone (PM, S. 191-193), vorzugsweise in einer Menge von 5-150, insbesondere 10-120 g AS/ha,
(B4.4.2) Pyraflufen, vorzugsweise Pyraflufen-ethyl (ET 751) (PM, S. 1048-1049), vorzugsweise in einer Menge von 1-60, insbesondere 2-50 g AS/ha, und/oder
(B4.4.3) Fluoroglycofen und dessen Salze und Ester, insbesondere der Ethylester (PM, S. 580-582), vorzugsweise in einer Menge von 1-60, insbesondere 2-50 g AS/ha, und/oder

(B4.5) aus der Gruppe der HPPDO-Hemmer, vorzugsweise in einer Menge von 1-5000, insbesondere 2-3000 g AS/ha, beispielsweise

(B4.5.1) Picolinafen, d. h. N-4-Fluorphenyl-6-(3-trifluormethylphenoxy)-pyridin-2-carbonsäureamid (AC 900001, vgl. AG Chem New Compound Review Vol. 17 (1999), Seite 35), vorzugsweise in einer Menge von 1-90, insbesondere 2-80 g AS/ha,
(B4.5.2) Aclonifen (PM, S. 14-16), vorzugsweise in einer Menge von 10-5000, insbesondere 20-3000 g AS/ha,
(B4.5.3) Isoxaflutole (PM, S. 737-739), vorzugsweise in einer Menge von 1-500, insbesondere 5-300 g AS/ha,
(B4.5.4) Clomazone (PM, S. 256-257), vorzugsweise in einer Menge von 50-5000, insbesondere 100-3000 g AS/ha, und/oder
(B4.5.5) Sulcotrione (PM, S. 1124-1125), vorzugsweise in einer Menge von 50-1000, insbesondere 80-600 g AS/ha, und/oder
(B4.5.6) Mesotrione, d. h. 2,(4-Mesyl-2-nitrobenzoyl)-cyclohexan-1,3-dion (ZA1296, vgl. Weed Science Society of America (WSSA) in WSSA Abstracts 1999, Bd. 39, Seite 65-66, Ziffern 130-132), vorzugsweise in einer Menge von 1-500, insbesondere 2-400 g AS/ha.

Im Falle von Wirkstoffen auf Basis von Carbonsäuren oder anderen salz- oder esterbildenden Wirkstoffen soll die Bezeichnung der Herbizide durch den "common name" der Säure im allgemeinen auch die Salze und Ester erfassen, vorzugsweise die handelsüblichen Salze und Ester, insbesondere die gängige Handelsform des Wirkstoffes.
Die Aufwandmengen der Herbizide (B) können von Herbizid zu Herbizid stark variieren. Als grobe Richtgröße können folgende Bereiche gelten:
Im Falle von Wirkstoffen auf Basis von Carbonsäuren oder anderen salz- oder esterbildenden Wirkstoffen soll

die Bezeichnung der Herbizide durch den "common name" der Säure im allgemeinen auch die Salze und Ester erfassen, vorzugsweise die handelsüblichen Salze und Ester, insbesondere die gängige Handelsform des Wirkstoffes.

Die Aufwandmengen der Herbizide (B) können von Herbizid zu Herbizid stark variieren. Als grobe Richtgröße können folgende Bereiche in g AS/ha gelten:

| | |
|---|---|
| Zu Verbindungen (B1) | 10-8000, vorzugsweise 10-5000, |
| Zu Verbindungen (B1.1) | 50-8000, vorzugsw. 50-5000, insbesondere 80-5000, |
| Zu Verbindungen (B1.2) | 10-5000, vorzugsw. 10-3000, insbesondere 10-1500, |
| Zu Verbindungen (B2) | 1-500, vorzugsweise 1-150, insbesonder 2-120, |
| Zu Verbindungen (B3) | 1-500, vorzugsweise 1-100, insbesondere 15-100, |
| Zu Verbindungen (B4) | 1-5000, vorzugsw. 1-2000 g, insbesondere 3-2000, |
| Zu Verbindungen (B4.1) | 1-300, vorzugsw. 1-150, insbesondere 1-100, |
| Zu Verbindungen (B4.2) | 10-5000, vorzugsw. 20-3000, insbesondere 50-2000, |
| Zu Verbindungen (B4.3) | 50-5000, vorzugsw. 50-3000, insbesondere 50-2000, |
| Zu Verbindungen (B4.4) | 1-150, vorzugsw. 2-120, insbesondere 50-100, |
| Zu Verbindungen (B4.5) | 1-5000, vorzugsw. 2-3000, insbesondere 5-1500. |

Die Mengenverhältnisse der Verbindungen (A) und (B) ergeben sich aus den genannten Aufwandmengen für die Einzelstoffe und sind beispielsweise folgende Mengenverhältnisse von besonderem Interesse:

(A):(B) im Bereich von 2000:1 bis 1:1000, vorzugsweise von 1000:1 bis 1:200, insbesondere 200:1 bis 1:100,
(A1):(B1) von 200:1 bis 1:250, vorzugsweise von 200:1 bis 1:100,
(A1):(B2) von 1500:1 bis 1:250, vorzugsweise 1000:1 bis 1:150, insbesondere 200:1 bis 1:100,
(A1):(B3) von 1500:1 bis 1:10, vorzugsweise von 200:1 bis 1:5,
(A1):(B4) von 5000:1 bis 1:250, vorzugsweise von 500:1 bis 1:6,

Weiterhin können die erfindungsgemäß verwendeten Kombinationen zusammen mit anderen Wirkstoffen beispielsweise aus der Gruppe der Safener, Fungizide, Insektizide und Pflanzenwachstumsregulatoren oder aus der Gruppe der im Pflanzenschutz üblichen Zusatzstoffe und Formulierungshilfsmittel eingesetzt werden. Zusatzstoffe sind beispielsweise Düngemittel und Farbstoffe.

Bevorzugt sind Herbizid-Kombinationen aus einer Verbindung (A) mit einer Verbindungen der Gruppe (B1) oder (B2) oder (B3).

Dabei sind auch solche Kombinationen erfindungsgemäßen verwenden, denen noch ein oder mehrere weitere Wirkstoffe anderer Struktur (Wirkstoffe (C)] zugesetzt werden wie

(A) + (B1) + (C), (A) + (82) + (C), (A) + (B3) + (C) oder (A) + (B4) + (C),

Für Kombinationen der letztgenannten Art mit drei oder mehr Wirkstoffen gelten die nachstehend insbesondere für erfindungsgemäß verwendeten Zweierkombinationen erläuterten bevorzugten Bedingungen in erster Linie ebenfalls, sofern darin die erfindungsgemäß verwendeten Zweierkombinationen enthalten sind und bezüglich der betreffenden Zweierkombination.

Von besonderem Interesse ist die Anwendung der Kombinationen

(A1.1) + (B1.1.1), (A1.1) + (B1.1.3), (A1.1) + (B1.1.4), (A1.1) + (B1.1.5),
(A1.1) + (B1.2.1), (A1.1) + (B1.2.2), (A1.1) + (B1.2.3), (A1.1) + (B1.2.6),
(A1.1) + (B2.1), (A1.1) + (B2.6),
(A1.1) + (B3.1), (A1.1) + (B3.2), (A1.1) + (B3.3),
(A1.1) + (B4.1.1), (A1.1) + (B4.1.4), (A1.1) + (B4.1.5), (A1.1) + (B4.1.6),
(A1.1) + (B4.2.1), (A1.1) + (B4.2.2), (A1.1) + (B4.2.3), (A1.1) + (B4.2.4), (A1.1) + (B4.2.5), (A1.1) + (B4.2.6), (A1.1) + (B4.2.8), (A1.1) + (B4.2.9),
(A1.1) + (B4.3.1), (A1.1) + (B4.3.2), (A1.1) + (B4.3.4), (A1.1) + (B4.4.1), (A1.1) + (B4.4.2), (A1.1) + (84.4.3),
(A1.1) + (B4.5.1), (A1.1) + (B4.5.2), (A1.1) + (B4.5.3), (A1.1) + (84.5.4), (A1.1) + (B4.5.5),

(A1.2) + (B1.1.1), (A1.2) + (B1.1.3), (A1.2) + (B1.1.4), (A1.2) + (B1.1.5),
(A1.2) + (B1.2.1), (A1.2) + (B1.2.2), (A1.2) + (B1.2.3), (A1.2) + (B1.2.6),
(A1.2) + (B2.1), (A1.2) + (B2.6),

(A1.2) + (B3.1), (A1.2) + (B3.2), (A1.2) + (B3.3).
(A1.2) + (B4.1.1), (A1.2) + (B4.1.4), (A1.2) + (B4.1.5), (A1.2) + (B4.1.6),
(A1.2) + (B4.2.1), (A1.2) + (B4.2.2), (A1.2) + (B4.2.3), (A1.2) + (B4.2.4), (A1.2) + (B4.2.5), (A1.2) + (B4.2.6), (A1.2) + (B4.2.8), (A1.2) + (B4.2.9),
(A1.2) + (B4.3.1), (A1.2) + (B4.3.2), (A1.2) + (B4.3.4), (A1.2) + (B4.4.1), (A1.2) + (B4.4.2), (A1.2) + (B4.4.3),
(A1.2) + (B4.5.1), (A1.2) + (B4.5.2), (A1.2) + (B4.5.3), (A1.2) + (B4.5.4), (A1.2) + (B4.5.5),

Weiterhin können die erfindungsgemäß verwendeten Kombinationen zusammen mit anderen Wirkstoffen beispielsweise aus der Gruppe der Safener, Fungizide, Insektizide und Pflanzenwachstumsregulatoren oder aus der Gruppe der im Pflanzenschutz üblichen Zusatzstoffe und Formulierungshilfsmittel eingesetzt werden.
Zusatzstoffe sind beispielsweise Düngemittel und Farbstoffe.
Für Kombinationen der letztgenannten Art mit drei oder mehr Wirkstoffen gelten die nachstehend insbesondere für erfindungsgemäß verwendeten Zweierkombinationen erläuterten bevorzugten Bedingungen in erster Linie ebenfalls, sofern darin die erfindungsgemäß verwendeten Zweierkombinationen enthalten sind.
Von besonderem Interesse ist auch die erfindungsgemäße Verwendung der Kombinationen mit einem Herbizid aus der Gruppe (A), vorzugsweise
(A1.2) und
mit einem Herbizid, aus der Gruppe, welche aus

(B1') selektiv in Getreide besonders gegen monokotyle Schadpflanzen wirksamen Herbiziden mit Blattwirkung und/ oder Bodenwirkung (Residualwirkung) aus der Gruppe Isoproturon, Fluthiamide, Prosulfocarb, Pendimethalin, Fenoxaprop-P, Diclofop, und Flupyrsulfuron,
(B2') selektiv in Getreide gegen monokotyle und dikotyle Schadpflanzen wirksamen Herbiziden mit überwiegend Blattwirkung aus der Gruppe Sulfosulfuron,
(B3') selektiv in Getreide gegen Dikotyle und Monokotyle wirksame Herbizide mit Blatt- und Bodenwirkung aus der Gruppe Diflufenican / Flurtamone, Metosulam und Flumetsulam und
(B4') selektiv in Getreide gegen monokotyle und dikotyle Schadpflanzen wirksame Herbizide mit Blattwirkung aus der Gruppe

(B4.1') Cinidon-ethyl,
(B4.2') Herbizide vom Wuchsstofftyp aus der Gruppe Fluroxypyr, Bentazone und Clopyralid.
(B4.3') Hydroxybenzonitrile / Photosynthesehemmer aus der Gruppe Bromoxynil, Ioxynil, und Metribuzin,
(B4.4') PPO-Hemmer aus der Gruppe Carfentrazone(-ethyl), Pyraflufen und Fluoroglycofen und
(B4.5') HPPDO-Hemmer, aus der Gruppe Picolinafen, Aclonifen, Isoxaflutole, Clomazone, Sulcotrione und Mesotrione

und gegebenenfalls im Pflanzenschutz übliche Zusatzstoffe und Formulierungshilfsmittel enthält.
Bevorzugt sind dabei die Kombinationen aus der jeweiligen Komponente (A) mit einem Herbizid aus der Gruppe (B1'), (B2'), (B3') oder (B4').
Einige der erfindungsgemäß zu verwendenden Herbizid-Kombinationen sind neu, vorzugsweise die aus den Kombinationen (A)+(B').
Die erfindungsgemäß verwendeten Kombinationen (= herbiziden Mittel) weisen eine ausgezeichnete herbizide Wirksamkeit gegen ein breites Spektrum wirtschaftlich wichtiger mono- und dikotyler Schadpflanzen auf. Auch schwer bekämpfbare perennierende Unkräuter, die aus Rhizomen, Wurzelstöcken oder anderen Dauerorganen austreiben, werden durch die Wirkstoffe gut erfaßt. Dabei ist es gleichgültig, ob die Substanzen im Vorsaat-, Vorauflauf- oder Nachauflaufverfahren ausgebracht werden. Bevorzugt ist die Anwendung im Nachauflaufverfahren oder im frühen Nachsaat-Vorauflaufverfahren.
Im einzelnen seien beispielhaft einige Vertreter der mono- und dikotylen Unkrautflora genannt, die durch die erfindungsgemäß verwendeten Verbindungen kontrolliert werden können, ohne daß durch die Nennung eine Beschränkung auf bestimmte Arten erfolgen soll.
Auf der Seite der monokotylen Unkrautarten werden z.B. Alopecurus spp., Avena spp., Setaria spp., Apera spica venti, Digitaria spp., Lolium spp. und Phalaris spp. gut erfaßt, aber auch Brachiaria spp., Panicum spp., Agropyron spp., Wildgetreideformen, Sorghum spp., Echinochloa spp., Cynodon spp., Poa spp. sowie Cyperusarten und Imperata.
Bei dikotylen Unkrautarten erstreckt sich das Wirkungsspektrum auf Arten wie z.B. Chenopodium spp., Matricaria spp., Amaranthus spp., Ambrosia spp., Galium spp., Emex spp., Lamium spp., Papaver spp., Solanum spp., Cirsium spp., Veronica spp., Anthemis spp., Lamium spp., Abutilon spp., Polygonum spp., Stellaria spp., Kochia spp. und Viola spp. Gut erfaßt, aber auch Datura spp., Chrysanthemum spp., Thlaspi spp., Pharbitis spp., ipomoea spp., Sida spp., Sinapis spp., Cupsella spp., Xanthium spp., Convolvulus spp., Rumex und Artemisia.

Werden die erfindungsgemäß verwendeten Verbindungen vor dem Keimen auf die Erdoberfläche appliziert, so wird entweder das Auflaufen der Unkrautkeimlinge vollständig verhindert oder die Unkräuter wachsen bis zum Keimblattstadium heran, stellen jedoch dann ihr Wachstum ein und sterben schließlich nach Ablauf von drei bis vier Wochen vollkommen ab.

Bei Applikation der Wirkstoffe auf die grünen Pflanzenteile im Nachauflaufverfahren tritt ebenfalls sehr rasch nach der Behandlung ein drastischer Wachstumsstop ein und die Unkrautpflanzen bleiben in dem zum Applikationszeitpunkt vorhandenen Wachstumsstadium stehen oder sterben nach einer gewissen Zeit ganz ab, so daß auf diese Weise eine für die Kulturpflanzen schädliche Unkrautkonkurrenz sehr früh und nachhaltig beseitigt wird.

Die erfindungsgemäß verwendeten herbiziden Mittel zeichnen sich im Vergleich zu den Einzelpräparaten durch eine schneller einsetzende und länger andauernde herbizide Wirkung aus. Die Regenfestigkeit der Wirkstoffe in den erfindungsgemäß verwendeten Kombinationen ist in der Regel günstig. Als besonderer Vorteil fällt ins Gewicht, daß die in den Kombinationen verwendeten und wirksamen Dosierungen von Verbindungen (A) und (B) so gering eingestellt werden können, daß ihre Bodenwirkung optimal ist. Somit wird deren Einsatz nicht nur in empfindlichen Kulturen erst möglich, sondern Grundwasser-Kontaminationen werden praktisch vermieden. Durch die erfindungsgemäß verwendeten Kombination von Wirkstoffen wird eine erhebliche Reduzierung der nötigen Aufwandmenge der Wirkstoffe ermöglicht.

Bei der gemeinsamer Anwendung von Herbiziden des Typs (A)+(B) treten überadditive (= synergistische) Effekte auf. Dabei ist die Wirkung in den Kombinationen stärker als die zu erwartende Summe der Wirkungen der eingesetzten Einzelherbizide. Die synergistischen Effekte erlauben eine Reduzierung der Aufwandmenge, die Bekämpfung eines breiteren Spektrums von Unkräutern und Ungräsern, einen schnelleren Eintritt der herbiziden Wirkung, eine längere Dauerwirkung, eine bessere Kontrolle der Schadpflanzen mit nur einer bzw. wenigen Applikationen sowie eine Ausweitung des möglichen Anwendungszeitraumes. Teilweise wird durch den Einsatz der Mittel auch die Menge an schädlichen Inhaltsstoffen in der Kulturpflanze, wie Stickstoff oder Ölsäure, reduziert.
Die genannten Eigenschaften und Vorteile sind in der praktischen Unkrautbekämpfung gefordert, um landwirtschaftliche Kulturen von unerwünschten Konkurrenzpflanzen freizuhalten und damit die Erträge qualitativ und quantitativ zu sichern und/oder zu erhöhen. Der technische Standard wird durch diese neuen Kombinationen hinsichtlich der beschriebenen Eigenschaften deutlich übertroffen.

Obgleich die erfindungsgemäß verwendeten Verbindungen eine ausgezeichnete herbizide Aktivität gegenüber mono- und dikotylen Unkräutern aufweisen, werden die toleranten bzw. kreuztoleranten Getreidepflanzen wie Weizen, Roggen, Gerste, Hafer und spezifischen Kulturen wie Triticale nur unwesentlich oder gar nicht geschädigt.

Darüberhinaus weisen die erfindungsgemäß verwendeten Mittel teilweise hervorragende wachstumsregulatorische Eigenschaften bei den Getreidepflanzen auf. Sie greifen regulierend in den pflanzeneigenen Stoffwechsel ein und können damit zur gezielten Beeinflussung von Pflanzeninhaltsstoffen eingesetzt werden. Desweiteren eignen sie sich auch zur generellen Steuerung und Hemmung von unerwünschtem vegetativen Wachstum, ohne dabei die Pflanzen abzutöten. Eine Hemmung des vegetativen Wachstums spielt bei vielen mono- und dikotylen Kulturen eine große Rolle, da das Lagern hierdurch verringert oder völlig verhindert werden kann.

Aufgrund ihrer herbiziden und pflanzenwachstumsregulatorischen Eigenschaften können die Mittel zur Bekämpfung von Schadpflanzen in bekannten toleranten oder kreuztoleranten Getreidekulturen oder noch zu entwickelnden toleranten oder gentechnisch veränderten Getreidekulturen eingesetzt werden. Die transgenen Pflanzen zeichnen sich in der Regel durch besondere vorteilhafte Eigenschaften aus, neben den Resistenzen gegenüber den erfindungsgemäßen Mitteln beispielsweise durch Resistenzen gegenüber Pflanzenkrankheiten oder Erregern von Pflanzenkrankheiten wie bestimmten Insekten oder Mikroorganismen wie Pilzen, Bakterien oder Viren. Andere besondere Eigenschaften betreffen z. B. das Erntegut hinsichtlich Menge, Qualität, Lagerfähigkeit, Zusammensetzung und spezieller Inhaltsstoffe. So sind transgene Pflanzen mit erhöhtem Ölgehalt oder veränderter Qualität, z. B. anderer Fettsäurezusammensetzung des Ernteguts bekannt. Herkömmliche Wege zur Herstellung neuer Pflanzen, die im Vergleich zu bisher vorkommenden Pflanzen modifizierte Eigenschaften aufweisen, bestehen beispielsweise in klassischen Züchtungsverfahren und der Erzeugung von Mutanten.

Alternativ können neue Pflanzen mit veränderten Eigenschaften mit Hilfe gentechnischer Verfahren erzeugt werden (siehe z. B. EP-A-0221044, EP-A-0131624). Beschrieben wurden beispielsweise in mehreren Fällen

- gentechnische Veränderungen von Kulturpflanzen zwecks Modifikation der in den Pflanzen synthetisierten Stärke (z. B. WO 92/11376, WO 92/14827, WO 91/19806),
- transgene Kulturpflanzen, welche Resistenzen gegen andere Herbizide aufweisen, beispielsweise gegen Sulfonylharnstoffe (EP-A-0257993, US-A-5013659),
- transgene Kulturpflanzen, mit der Fähigkeit Bacillus thuringiensis-Toxine (Bt-Toxine) zu produzieren, welche die Pflanzen gegen bestimmte Schädlinge resistent machen (EP-A-0142924, EP-A-0193259).
- transgene Kulturpflanzen mit modifizierter Fettsäurezusammensetzung (WO 91/13972).

Zahlreiche molekularbiologische Techniken, mit denen neue transgene Pflanzen mit veränderten Eigenschaften hergestellt werden können, sind im Prinzip bekannt; siehe z.B. Sambrook et al., 1989, Molecular Cloning, A Laboratory Manual, 2. Aufl. Cold Spring Harbor Laboratory Press, Cold Spring Harbor, NY; oder Winnacker "Gene und Klone", VCH Weinheim 2. Auflage 1996 oder Christou, "Trends in Plant Science" 1 (1996) 423-431).

Für derartige gentechnische Manipulationen können Nucleinsäuremoleküle in Plasmide eingebracht werden, die eine Mutagenese oder eine Sequenzveränderung durch Rekombination von DNA-Sequenzen erlauben. Mit Hilfe der obengenannten Standardverfahren können z. B. Basenaustausche vorgenommen, Teilsequenzen entfernt oder natürliche oder synthetische Sequenzen hinzugefügt werden. Für die Verbindung der DNA-Fragmente untereinander können an die Fragmente Adaptoren oder Linker angesetzt werden.

Die Herstellung von Pflanzenzellen mit einer verringerten Aktivität eines Genprodukts kann beispielsweise erzielt werden durch die Expression mindestens einer entsprechenden antisense-RNA, einer sense-RNA zur Erzielung eines Cosuppressionseffektes oder die Expression mindestens eines entsprechend konstruierten Ribozyms, das spezifisch Transkripte des obengenannten Genprodukts spaltet.

Hierzu können zum einen DNA-Moleküle verwendet werden, die die gesamte codierende Sequenz eines Genprodukts einschließlich eventuell vorhandener flankierender Sequenzen umfassen, als auch DNA-Moleküle, die nur Teile der codierenden Sequenz umfassen, wobei diese Teile lang genug sein müssen, um in den Zellen einen antisense-Effekt zu bewirken. Möglich ist auch die Verwendung von DNA-Sequenzen, die einen hohen Grad an Homologie zu den codierenden Sequenzen eines Genprodukts aufweisen, aber nicht vollkommen identisch sind.

Bei der Expression von Nucleinsäuremolekülen in Pflanzen kann das synthetisierte Protein in jedem beliebigen Kompartiment der pflanzlichen Zelle lokalisiert sein. Um aber die Lokalisation in einem bestimmten Kompartiment zu erreichen, kann z. B. die codierende Region mit DNA-Sequenzen verknüpft werden, die die Lokalisierung in einem bestimmten Kompartiment gewährleisten. Derartige Sequenzen sind dem Fachmann bekannt (siehe beispielsweise Braun et al., EMBO J. 11 (1992), 3219-3227; Wolter et al., Proc. Natl. Acad. Sci. USA 85 (1988), 846-850; Sonnewald et al., Plant J. 1 (1991), 95-106).

Die transgenen Pflanzenzellen können nach bekannten Techniken zu ganzen Pflanzen regeneriert werden. Bei den transgenen Pflanzen kann es sich prinzipiell um Pflanzen jeder beliebigen Pflanzenspezies handeln, d.h. sowohl monokotyle als auch dikotyle Pflanzen.

So sind transgene Pflanzen erhältlich, die veränderte Eigenschaften durch Überexpression, Suppression oder Inhibierung homologer (= natürlicher) Gene oder Gensequenzen oder Expression heterologer (= fremder) Gene oder Gensequenzen aufweisen.

Gegenstand der Erfindung ist deshalb auch ein Verfahren zur Bekämpfung von unerwünschtem Pflanzenwuchs in toleranten Getreidekulturen, dadurch gekennzeichnet, daß man ein Herbizid des Typs (A) mit einem Herbizid des Typs (B) auf die Schadpflanzen, Pflanzenteile davon oder die Anbaufläche appliziert.

Die erfindungsgemäß verwendeten Wirkstoffkombinationen können sowohl als Mischformulierungen der zwei Komponenten, gegebenenfalls mit weiteren Wirkstoffen, Zusatzstoffen und/oder üblichen Formulierungshilfsmitteln vorliegen, die dann in üblicher Weise mit Wasser verdünnt zur Anwendung gebracht werden, oder als sogenannte Tankmischungen durch gemeinsame Verdünnung der getrennt formulierten oder partiell getrennt formulierten Komponenten mit Wasser hergestellt werden.

Die Verbindungen (A) und (B) oder deren Kombinationen können auf verschiedene Art formuliert werden, je nachdem welche biologischen und/oder chemisch-physikalischen Parameter vorgegeben sind. Als allgemeine Formulierungsmöglichkeiten kommen beispielsweise in Frage: Spritzpulver (WP), emulgierbare Konzentrate (EC), wäßrige Lösungen (SL), Emulsionen (EW) wie Öl-in-Wasser- und Wasser-in-Öl-Emulsionen, versprühbare Lösungen oder Emulsionen, Dispersionen auf Öl- oder Wasserbasis, Suspoemulsionen, Stäubemittel (DP), Beizmittel, Granulate zur Boden- oder Streuapplikation oder wasserdispergierbare Granulate (WG), ULV-Formufierungen, Mikrokapseln oder Wachse.

Die einzelnen Formulierungstypen sind im Prinzip bekannt und werden beispielsweise beschrieben in: Winnacker-Küchler, "Chemische Technologie", Band 7, C. Hauser Verlag München, 4. Aufl. 1986; van Valkenburg, "Pesticide Formulations", Marcel Dekker N.Y., 1973; K. Martens, "Spray Drying Handbook", 3rd Ed. 1979, G. Goodwin Ltd. London.

Die notwendigen Formulierungshilfsmittel wie Inertmaterialien, Tenside, Lösungsmittel und weitere Zusatzstoffe sind ebenfalls bekannt und werden beispielsweise beschrieben in: Watkins, "Handbook of Insecticide Dust Diluents and Carriers", 2nd Ed., Darland Books, Caldwell N.J.; H.v. Olphen, "Introduction to Clay Colloid Chemistry"; 2nd Ed., J. Wiley & Sons, N.Y. Marsden, "Solvents Guide", 2nd Ed., Interscience, N.Y. 1950; McCutcheon's, "Detergents and Emulsifiers Annual", MC Publ. Corp., Ridegewood N.J.; Sisley and Wood, "Encyclopedia of Surface Active Agents", Chem. Publ. Co. Inc., N.Y. 1964; Schönfeldt, "Grenzflächenaktive Äthylenoxidaddukte", Wiss. Verlagsgesellschaft, Stuttgart 1976, Winnacker-Küchler, "Chemische Technologie", Band 7, C. Hauser Verlag München, 4. Aufl. 1986.

Auf der Basis dieser Formulierungen lassen sich auch Kombinationen mit anderen pestizid wirksamen Stoffen, wie anderen Herbiziden, Fungiziden oder Insektiziden, sowie Safenern, Düngemitteln und/oder Wachstumsregulatoren herstellen, z.B. in Form einer Fertigformulierung oder als Tankmix.

Spritzpulver (benetzbare Pulver) sind in Wasser gleichmäßig dispergierbare Präparate, die neben dem Wirkstoff außer einem Verdünnungs- oder Inertstoff noch Tenside ionischer oder nichtionischer Art (Netzmittel, Dispergiermittel),

z.B. polyoxethylierte Alkylphenole, polyethoxylierte Fettalkohole oder -Fettamine, Alkansulfonate oder Alkylbenzolsulfonate, ligninsulfonsaures Natrium, 2,2'dinaphthylmethan-6,6'-disulfonsaures Natrium, dibutylnaphthalin-sulfonsaures Natrium oder auch oleoylmethyltaurinsaures Natrium enthalten.

Emulgierbare Konzentrate werden durch Auflösen des Wirkstoffs in einem organischen Lösungsmittel, z.B. Butanol, Cyclohexanon, Dimethylformamid, Xylol oder auch höhersiedenden Aromaten oder Kohlenwasserstoffe unter Zusatz von einem oder mehreren ionischen oder nichtionischen Tensiden (Emulgatoren) hergestellt. Als Emulgatoren können beispielsweise verwendet werden: Alkylarylsulfonsaure CalciumSalze wie Ca-Dodecylbenzolsulfonat oder nichtionische Emulgatoren wie Fettsäurepolyglykolester, Alkylarylpolyglykolether, Fettalkoholpolyglykolether, Propylenoxid-Ethylenoxid-Kondensationsprodukte, Alkylpolyether, Sorbitanfettsäureester, Polyoxyethylensorbitanfettsäureester oder Polyoxethylensorbitester.

Stäubemittel erhält man durch Vermahlen des Wirkstoffs mit fein verteilten festen Stoffen, z.B. Talkum, natürlichen Tonen, wie Kaolin, Bentonit und Pyrophyllit, oder Diatomeenerde.

Granulate können entweder durch Verdüsen des Wirkstoffes auf adsorptionsfähiges, granuliertes inertmaterial hergestellt werden oder durch Aufbringen von Wirkstoffkonzentraten mittels Klebemitteln, z.B. Polyvinylalkohol, polyacrylsaurem Natrium oder auch Mineralölen, auf die Oberfläche von Trägerstoffen wie Sand, Kaolinite oder von granuliertem Inertmaterial. Auch können geeignete Wirkstoffe in der für die Herstellung von Düngemittelgranulaten üblichen Weise - gewünschtenfalls in Mischung mit Düngemitteln - granuliert werden. Wasserdispergierbare Granulate werden in der Regel nach Verfahren wie Sprühtrocknung, Wirbelbett-Granulierung, Teller-Granulierung, Mischung mit Hochgeschwindigkeitsmischem und Extrusion ohne festes Inertmaterial hergestellt.

Die agrochemischen Zubereitungen enthalten in der Regel 0,1 bis 99 Gewichtsprozent, insbesondere 2 bis 95 Gew.-%, Wirkstoffe der Typen A und/oder B, wobei je nach Formulierungsart folgende Konzentrationen üblich sind:
In Spritzpulvern beträgt die Wirkstoffkonzentration z.B. etwa 10 bis 95 Gew.-%, der Rest zu 100 Gew.-% besteht aus üblichen Formulierungsbestandteilen. Bei emulgierbaren Konzentraten kann die Wirkstoffkonzentration z.B. 5 bis 80 Gew.-%. betragen.
Staubförmige Formulierungen enthalten meistens 5 bis 20 Gew.-% an Wirkstoff, versprühbare Lösungen etwa 0,2 bis 25 Gew.-% Wirkstoff.
Bei Granulaten wie dispergierbaren Granulaten hängt der Wirkstoffgehalt zum Teil davon ab, ob die wirksame Verbindung flüssig oder fest vorliegt und welche Granulierhilsmittel und Füllstoffe verwendet werden. In der Regel liegt der Gehalt bei den in Wasser dispergierbaren Granulaten zwischen 10 und 90 Gew.-%.

Daneben enthalten die genannten Wirkstofformulierungen gegebenenfalls die jeweils üblichen Haft-, Netz-, Dispergier-, Emulgier-, Konservierungs-, Frostschutz- und Lösungsmittel, Füll-, Farb- und Trägerstoffe, Entschäumer, Verdunstungshemmer und Mittel, die den pH-Wert oder die Viskosität beeinflussen.

Beispielsweise ist bekannt, daß die Wirkung von Glufosinate-ammonium (A1.2) ebenso wie die seines L-Enantiomeren durch oberflächenaktive Substanzen verbessert werden kann, vorzugsweise durch Netzmittel aus der Reihe der Alkyl-polyglykolethersulfate, die beispielsweise 10 bis 18 C-Atomen enthalten und in Form ihrer Alkali- oder Ammoniumsalze, aber auch als Magnesiumsalz verwendet werden, wie $C_{12}/C_{14}$-Fettalkohol-diglykolethersulfat-Natrium (®Genapol LRO, Hoechst); siehe EP-A-0476555, EP-A-0048436, EP-A-0336151 oder US-A-4,400,196 sowie Proc. EWRS Symp. "Factors Affecting Herbicidal Activity and Selectivity", 227 - 232 (1988). Weiterhin ist bekannt, daß Alkylpolyglykolethersulfate auch als Penetrationshilfsmittel und Wirkungsverstärker für eine Reihe anderer Herbizide, unter anderem auch für Herbizide aus der Reihe der imidazolinone geeignet sind; siehe EP-A-0502014.

Zur Anwendung werden die in handelsüblicher Form vorliegenden Formulierungen gegebenenfalls in üblicher Weise verdünnt, z.B. bei Spritzpulvern, emulgierbaren Konzentraten, Dispersionen und wasserdispergierbaren Granulaten mittels Wasser. Staubförmige Zubereitungen, Boden- bzw. Streugranulate, sowie versprühbare Lösungen werden vor der Anwendung üblicherweise nicht mehr mit weiteren inerten Stoffen verdünnt.

Die Wirkstoffe können auf die Pflanzen, Pflanzenteile, Pflanzensamen oder die Anbaufläche (Ackerboden) ausgebracht werden, vorzugsweise auf die grünen Pflanzen und Pflanzenteile und gegebenenfalls zusätzlich auf den Ackerboden.
Eine Möglichkeit der Anwendung ist die gemeinsame Ausbringung der Wirkstoffe in Form von Tankmischungen, wobei die optimal formulierten konzentrierten Formulierungen der Einzelwirkstoffe gemeinsam im Tank mit Wasser gemischt und die erhaltene Spritzbrühe ausgebracht wird.

Eine gemeinsame herbizide Formulierung der erfindungsgemäß verwendeten Kombination an Wirkstoffen (A) und (B) hat den Vorteil der leichteren Anwendbarkeit, weil die Mengen der Komponenten bereits im richtigen Verhältnis zueinander eingestellt sind.

Außerdem können die Hilfsmittel in der Formulierung aufeinander optimal abgestimmt werden, während ein Tank-mix von unterschiedlichen Formulierungen unerwünschte Kombinationen von Hilfstoffen ergeben kann.

A. Formulierungsbeispiele allgemeiner Art

a) Ein Stäubemittel wird erhalten, indem man 10 Gew.-Teile eines Wirkstoffs/Wirksstoffgemischs und 90 Gew.-Teile Talkum als Inertstoff mischt und in einer Schlagmühle zerkleinert.

b) Ein in Wasser leicht dispergierbares, benetzbares Pulver wird erhalten, indem man 25 Gew.-Teile eines Wirkstoffs/Wirksstoffgemischs, 64 Gew.-Teile kaolinhaltigen Quarz als Inertstoff, 10 Gew.-Teile ligninsulfonsaures Kalium und 1 Gew.-Teil oleoylmethyltaurinsaures Natrium als Netz- und Dispergiermittel mischt und in einer Stiftmühle mahlt.

c) Ein in Wasser leicht dispergierbares Dispersionskonzentrat wird erhalten, indem man 20 Gew.-Teile eines Wirkstoffs/Wirksstoffgemischs mit 6 Gew.-Teilen Alkylphenolpolyglykolether (®Triton X 207), 3 Gew.-Teilen Isotridecanolpolyglykolether (8 EO) und 71 Gew.-Teilen paraffinischem Mineralöl (Siedebereich z.B. ca. 255 bis 277 C) mischt und in einer Reibkugelmühle auf eine Feinheit von unter 5 Mikron vermahlt.

d) Ein emulgierbares Konzentrat wird erhalten aus 15 Gew.-Teilen eines Wirkstoffs/Wirksstoffgemischs, 75 Gew.-Teilen Cyclohexanon als Lösemittel und 10 Gew.-Teilen oxethyliertem Nonylphenol als Emulgator.

e) Ein in Wasser dispergierbares Granulat wird erhalten indem man

75 Gew.-Teile eines Wirkstoffs/Wirksstoffgemischs,
10 Gew.-Teile ligninsulfonsaures Calcium,
5 Gew.-Teile Natriumlaurylsulfat,
3 Gew.-Teile Polyvinylalkohol und
7 Gew.-Teile Kaolin

mischt, auf einer Stiftmühle mahlt und das Pulver in einem Wirbelbett durch Aufsprühen von Wasser als Granulierflüssigkeit granuliert.

f) Ein in Wasser dispergierbares Granulat wird auch erhalten, indem man

25 Gew.-Teile eines Wirkstoffs/Wirksstoffgemischs,
5 Gew.-Teile 2,2'-dinaphthylmethan-6,6'-disulfonsaures Natrium,
2 Gew.-Teile oleoylmethyltaurinsaures Natrium,
1 Gew.-Teil Polyvinylalkohol,
17 Gew.-Teile Calciumcarbonat und
50 Gew.-Teile Wasser

auf einer Kolloidmühle homogenisiert und vorzerkleinert, anschließend auf einer Perlmühle mahlt und die so erhaltene Suspension in einem Sprühturm mittels einer Einstoffdüse zerstäubt und trocknet.

Biologische Beispiele

1. Unkrautwirkung im Vorauflauf

Samen bzw. Rhizomstücke von mono- und dikotylen Unkrautpflanzen werden in Papptöpfen in sandiger Lehmerde ausgelegt und mit Erde abgedeckt. Die in Form von konzentrierten wäßrigen Lösungen, benetzbaren Pulvern oder Emulsionskonzentraten formulierten Mittel werden dann als wäßrige Lösung, Suspension bzw. Emulsion mit einer Wasseraufwandmenge von umgerechnet 600 bis 800 l/ha in unterschiedlichen Dosierungen auf die Oberfläche der Abdeckerde appliziert. Nach der Behandlung werden die Töpfe im Gewächshaus aufgestellt und unter guten Wachstumsbedingungen für die Unkräuter gehalten. Die optische Bonitur der Pflanzen- bzw. Auflaufschäden erfolgt nach dem Auflaufen der Versuchspflanzen nach einer Versuchszeit von 3 bis 4 Wochen im Vergleich zu unbehandelten Kontrollen. Wie die Testergebnisse zeigen, weisen die erfindungsgemäß verwendeten Mittel eine gute herbizide Vorauflaufwirksamkeit gegen ein breites Spektrum von Ungräsern und Unkräutern auf.
Dabei werden häufig Wirkungen der erfindungsgemäß verwendeten Kombinationen beobachtet, die die formale Summe der Wirkungen bei Einzelapplikation der Herbizide übertreffen (= synergistische Wirkung).
Wenn die beobachteten Wirkungswerte bereits die formale Summe der Werte zu den Versuchen mit Einzelapplikationen

übertreffen, dann übertreffen sie den Erwartungswert nach Colby ebenfalls, der sich nach folgender Formel errechnet und ebenfalls als Hinweis auf Synergismus angesehen wird (vgl. S. R. Colby; in Weeds 15 (1967) S. 20 bis 22):

$$E = A+B-(A \cdot B/100)$$

Dabei bedeuten: A, B = Wirkung der Wirkstoffe A bzw. in % bei a bzw. b g AS/ha; E = Erwartungswert in % bei a+b g AS/ha.
Die beobachteten Werte der Versuche zeigen bei geeigneten niedrigen Dosierungen eine Wirkung der Kombinationen, die über den Erwartungswerten nach Colby liegen.

2. Unkrautwirkung im Nachauflauf

Samen bzw. Rhizomstücke von mono- und dikotylen Unkräutern werden in Papptöpfen in sandigem Lehmboden ausgelegt, mit Erde abgedeckt und im Gewächshaus unter guten Wachstumsbedingungen angezogen. Drei Wochen nach der Aussaat werden die Versuchspflanzen im Dreiblattstadium mit den erfindungsgemäß verwendeten Mitteln behandelt. Die als Spritzpulver bzw. als Emulsionskonzentrate formulierten erfindungsgemäß verwendeten Mittel werden in verschiedenen Dosierungen mit einer Wasseraufwandmenge von umgerechnet 600 bis 800 l/ha auf die grünen Pflanzenteile gesprüht. Nach ca. 3 bis 4 Wochen Standzeit der Versuchspflanzen im Gewächshaus unter optimalen Wachstumsbedingungen wird die Wirkung der Präparate optisch im Vergleich zu unbehandelten Kontrollen bonitiert. Die erfindungsgemäß verwendeten Mittel weisen auch im Nachauflauf eine gute herbizide Wirksamkeit gegen ein breites Spektrum wirtschaftlich wichtiger Ungräser und Unkräuter auf.
Dabei werden häufig Wirkungen der erfindungsgemäß verwendeten Kombinationen beobachtet, die die formale Summe der Wirkungen bei Einzelapplikation der Herbizide übertreffen. Die beobachteten Werte der Versuche zeigen bei geeigneten niedrigen Dosierungen eine Wirkung der Kombinationen, die über den Erwartungswerten nach Colby (vgl. Bonitur in Beispiel 1) liegen.

3. Herbizide Wirkung und Kulturpflanzenverträglichkeit (Feldversuch)

Pflanzen von transgenem Getreide mit einer Resistenz gegen ein oder mehrere Herbizide (A) wurden zusammen mit typischen Unkrautpflanzen im Freiland auf Parzellen der Größe 2 x 5m unter natürlichen Freilandbedingungen herangezogen; alternativ stellte sich beim Heranziehen der Getreidepflanzen die Verunkrautung natürlich ein. Die Behandlung mit den erfindungsgemäß verwendeten Mitteln und zur Kontrolle separat mit alleiniger Applikation der Komponentenwirkstoffe erfolgte unter Standardbedingungen mit einem Parzellen-Spritzgerät bei einer Wasseraufwandmenge von 200-300 Liter je Hektar in Parallelversuchen gemäß dem Schema aus Tabelle 1, d. h. im Vorsaat-Vorauflauf, im Nachsaat-Vorauflauf oder im Nachauflauf im frühen, mittleren oder späten Stadium.

Tabelle 1:

| Anwendungsschema - Beispiele | | | | | |
|---|---|---|---|---|---|
| Applikation der Wirkstoffe | Vorsaat | Vorauflauf nach Saat | Nachauflauf 1-2-Blatt | Nachauflauf 2-4-Blatt | Nachauflauf 6-Blatt |
| kombiniert | (A)+(B) | | | | |
| " | | (A)+(B) | | | |
| " | | | (A)+(B) | | |
| " | | | | (A)+(B) | |
| " | | | | | (A)+(B) |
| sequentiell | (A)+(B) | (A)+(B) | | | |
| " | | (A)+(B) | (A)+(B) | | |
| " | (A) | (A)+(B) | | | |
| " | (B) | (A)+(B) | | | |
| " | | | (A)+(B) | (A)+(B) | |

(fortgesetzt)

| Anwendungsschema - Beispiele | | | | | |
|---|---|---|---|---|---|
| Applikation der Wirkstoffe | Vorsaat | Vorauflauf nach Saat | Nachauflauf 1-2-Blatt | Nachauflauf 2-4-Blatt | Nachauflauf 6-Blatt |
| " | | | (A)+(B) | (A)+(B) | (A)+(B) |
| " | (B) | | (A) | (A)+(B) | |
| " | | (B) | | (A)+(B) | (A)+(B) |
| " | | | | (A)+(B) | (A)+(B) |
| " | | | (A) | (A)+(B) | (A)+(B) |

Im Abstand von 2, 4, 6 und 8 Wochen nach Applikation wurde die herbizide Wirksamkeit der Wirkstoffe bzw. Wirkstoffmischungen anhand der behandelten Parzellen im Vergleich zu unbehandelten Kontroll-Parzellen visuell bonitiert. Dabei wurde Schädigung und Entwicklung aller oberirdischen Pflanzenteile erfaßt. Die Bonitierung erfolgte nach einer Prozentskala (100% Wirkung = alle Plfanzen abgestorben; 50 % Wirkung = 50% der Pflanzen und grünen Pflanzenteile abgestorben; 0 % Wirkung = keine erkennbare Wirkung = wie Kontrollparzelle. Die Boniturwerte von jeweils 4 Parzellen wurden gemittelt.

Der Vergleich zeigte, daß die erfindungsgemäß verwendeten Kombinationen meist mehr, teilweise erheblich mehr herbizide Wirkung aufweisen als die Summe der Wirkungen der Einzelherbizide ($E^A$) . Die Wirkungen lagen in wesentlichen Abschnitten des Boniturzeitraums über den Erwartungswerten nach Colby ($E^c$) (vgl. Bonitur in Beispiel 1) und weisen deshalb auf einen Synergismus hin. Die Getreidepflanzen dagegen wurden infolge der Behandlungen mit den herbiziden Mitteln nicht oder nur unwesentlich geschädigt.

In den nachfolgenden Tabellen allgemein verwendete Abkürzungen:

| | |
|---|---|
| g AS/ha = | Gramm Aktivsubstanz (100 % Wirkstoff) pro Hektar |
| $E^A$ = | Summe der herbiziden Wirkungen der Einzelapplikationen |
| $E^C$ = | Erwartungswert nach Colby (vgl. Bonitur zu Tabelle 1) |

Tabelle 2:

| Herbizide Wirkung im Feldversuch in Getreide (Weizen) | | | |
|---|---|---|---|
| Wirkstoff(e) | Dosis1) g AS/ha | Herbizide Wirkung2) Alopecurus myosuroides | (%) gegen Digitaria Sanguinalis |
| (A1.2) | 200<br>400<br>600 | 55<br>83<br>93 | 45<br>90<br>99 |
| (B4.4.2) | 10 | 0 | 0 |
| (A1.2) +<br>(B4.4.2) | 200+10<br>400+10 | 68<br>99 | 75<br>90 |
| Abkürzungen zu Tabelle 2:<br>1) = Applikation Bestockungsbeginn<br>2) = Bonitur 3 Wochen nach Applikation<br>(A1.2) = Glufosinate-ammonium (B4.4.2) = Pyraflufen-ethyl | | | |

Tabelle 3:

| Herbizide Wirkung im Feldversuch in Getreide (Weizen) | | |
|---|---|---|
| Wirkstoff(e) | Dosis1) g AS/ha | Herbizide Wirkung2) (%) gegen Ambrosia maritima |
| (A1.2) | 200<br>400<br>600 | 58<br>100<br>100 |

(fortgesetzt)

| Herbizide Wirkung im Feldversuch in Getreide (Weizen) | | |
|---|---|---|
| Wirkstoff(e) | Dosis[1)] g AS/ha | Herbizide Wirkung[2)] (%) gegen Ambrosia maritima |
| (B4.2.4) | 500 | 0 |
| (A1.2) + (B4.2.4) | 200+500 | 100 |
| Abkürzungen zu Tabelle 3:<br>1) = Applikation Bestockungsbeginn<br>2) = Bonitur 11 Tage nach Applikation<br>(A1.2) = Glufosinate-ammonium<br>(B4.2.4) = MCPA | | |

Das behandelte Getreide zeigte keine wesentlichen Schäden.

Tabelle 4:

| Wirkstoff(e) | Dosis[1)] g AS/ha | Herbizide Wirkung[2)] (%) gegen Lamium purpureum |
|---|---|---|
| (A1.2) | 330<br>200 | 35<br>8 |
| (B4.3.1) | 360<br>180 | 83<br>55 |
| (A1.2) + (B4.3.1) | 200 + 180 | 63 ($E^c$= 58,6) |
| (B1.1.5) | 960 | 75 |
| (A1.2) + (B1.1.5) | 200 + 960 | 93 ($E^A$ = 83) |
| (B2.1) | 3 | 75 |
| (A1.2) + (B2.1) | 200 + 3 | 88 ($E^A$ = 83) |
| (B4.1.1) | 15 | 68 |
| (A1.2) + (B4.1.1) | 200 + 15 | 86 ($E^A$ = 73) |
| Abkürzungen zu Tabelle 4:<br>1) = Applikation im 4-Blattstadium<br>2) = Bonitur 28 Tage nach Applikation<br>(A1.2) = Glufosinate-ammonium<br>(B4.3.1) = Bromoxynil<br>(B1.1.5) = Pendimethalin<br>(B2.1) = Metsulfuron-methyl<br>(B4.1.1) = Tribenuron-methyl | | |

Tabelle 5:

| Herbizide Wirkung im Feldversuch in Getreide (Weizen) | | |
|---|---|---|
| Wirkstoff(e) | Dosis[1)] g AS/ha | Herbizide Wirkung[2)] (%) gegen Galium aparine |
| (A1.2) | 300<br>200<br>100 | 0<br>0<br>0 |
| (B4.4.1) | 20<br>10 | 55<br>45 |
| (A1.2) + (B4.4.1) | 200 + 10 | 63 ($E^A$= 45) |
| (B4.1.6) | 35 | 65 |

(fortgesetzt)

| Herbizide Wirkung im Feldversuch in Getreide (Weizen) | | |
|---|---|---|
| Wirkstoff(e) | Dosis[1)] g AS/ha | Herbizide Wirkung[2)] (%) gegen Galium aparine |
| (A1.2) + (B4.1.6) | 200 + 35 | 85 ($E^A$ = 65) |
| (B4.2.2) | 750 | 73 |
| (A1.2) + (B4.2.2) | 200 + 750 | 83 ($E^A$ = 75) |
| (B4.2.5) | 120 | 75 |
| (A1.2) + (B4.2.5) | 200 + 120 | 93 ($E^A$ =73) |

Abkürzungen zu Tabelle 5:
[1)] = Applikation im 4-Blattstadium
[2)] = Bonitur 28 Tage nach Applikation
(A1.2) = Glufosinate-ammonium
(B4.4. 1) = Carfentrazone-ethyl
(B4.1.6) = Cinidon-ethyl
(B4.2.2) = CMPP
(B4.2.5) = Fluroxypyr

Tabelle 6:

| Herbizide Wirkung im Feldversuch in Getreide (Weizen) | | |
|---|---|---|
| Wirkstoff(e) | Dosis[1)] g AS/ha | Herbizide Wirkung[2)] (%) gegen Lolium multiflorum |
| (A1.2) | 500<br>330<br>200 | 78<br>15<br>0 |
| (B1.2.3) | 750<br>500 | 83<br>60 |
| (A1.2) + (B1.2.3) | 200 + 500<br>200 + 750 | 75 ($E^A$= 60)<br>85 ($E^A$= 83) |
| (B1.2.2) | 50 | 73 |
| (A1.2) + (B1.2.2) | 200 + 50 | 85 ($E^A$ = 73) |
| (B1.2.6) | 7,5 | 25 |
| (A1.2) + (B1.2.6) | 330 + 7,5 | 55 ($E^A$ = 40) |
| (B3.1) | 150 | 35 |
| (A1.2) + (83.1 ) | 200 + 150 | 65 ($E^A$ = 35) |

Abkürzungen zu Tabelle 6:
[1)] = Applikation im 3-Blattstadium
[2)] = Bonitur 27 Tage nach Applikation
(A1.2) = Glufosinate-ammonium (B1.2.3) = Diclofop-methyl
(B1.2.2) = Clodinafop-propargyl (B1.2.6) = Flupyrsulfuron
(A3.2) = Imazethapyr (B3.1) = Diflufenican

**Patentansprüche**

1. Verwendung von Herbizid-Kombinationen zur Bekämpfung von Schadpflanzen in Getreidekulturen, ausgenommen Reis und Mais, **dadurch gekennzeichnet, daß** die jeweilige Herbizid-Kombination einen synergistisch wirksamen Gehalt an

(A) einem breitwirksamen Herbizid aus der Gruppe der Verbindungen, welche aus Verbindungen der Formeln (A1),

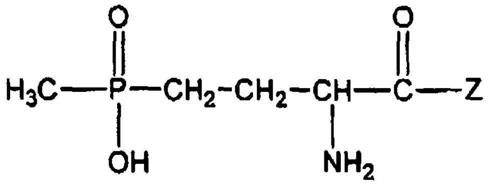

(A1)

worin Z einen Rest der Formel -OH oder einen Peptidrest der Formel $-NHCH(CH_3)CONHCH(CH_3)CCOH$ bedeutet, und deren Salzen besteht,
und
(B) einem Herbizid aus der Gruppe der Verbindungen, welche aus

(B1) selektiv in Getreide besonders gegen monokotyle Schadpflanzen wirksamen Herbiziden mit Blattwirkung und/oder Bodenwirkung (Residualwirkung) aus der Gruppe Isoproturon, Fluthiamide, Prosulfocarb, Pendimethalin, Fenoxaprop-P. Fenoxaprop, Clodinafop, Diclofop und Flupyrsulfuron,
(B2) selektiv in Getreide gegen monokotyle und dikotyle Schadpflanzen wirksamen Herbiziden mit überwiegend Blattwirkung aus der Gruppe Metsulfuron und Sutforulfuron
(83) selektiv in Getreide gegen Dikotyle und Monokotyle wirksamen Herbiziden mit Blatt- und Bodenwirkung aus der Gruppe Diflufenican / Flurtamone, Metosulam und Flumetsulam und
(84) selektiv in Getreide gegen monokotyle und dikotyle Schadpflanzen wirksamen Herbiziden mit Blattwirkung aus der Gruppe

(B4.1) Tribenuron, Thifensulfuron, Prosulfuron und Cinidon-ethyl und
(B4.2) Herbizide yom Wuchsstofftyp aus der Gruppe 2,4-D, CMPP-P, Dichlorprop, MCPA, Fluroxypyr, Dicamba, Bentazone, und Clopyralid und
(B4.3) Hydroxybenzonitrile / Photosynthesehemmer aus der Gruppe Bromoxynil, loxynil und Metribuzin und
(B4.4) PPO-Hemmer aus der Gruppe Carfentrazone(-ethyl), Pyraflufen und Fluoroglycofen und
(B4.5) HPPDO-Hemmer aus der Gruppe Picolinafen, Aclonifen, Isoxaflutole, Clomazone, Sulcotrione und Mesotrione

besteht,
aufweist und die Getreidekulturen gegenüber den in der Kombination enthaltenen Herbiziden (A) und (B), gegebenenfalls in Gegenwart von Safenem, tolerant sind.

2. Verwendung nach Anspruch 1, **dadurch gekennzeichnet, daß** als Wirkstoff (A) Glufosinate-ammonium eingesetzt wird.

3. Verwendung nach einem der Anspruche 1 oder 2, **dadurch gekennzeichnet, daß** Herbizid-Kombination weitere Pflanzenschutzmittelwirkstoffe enthält.

4. Verwendung nach einem der Ansprüche 1 bis 3, **dadurch gekennzeichnet, daß** die Herbizid-Kombination im Pflanzenschutz übliche Hilfsstoffe und Formulierungshilfsmittel enthält.

5. Verfahren zur Bekämpfung von Schadpflanzen in toleranten Getreidekulturen, ausgenommen Reis und Mais, **dadurch gekennzeichnet, daß** man die Herbizide der Herbizid-Kombination, definiert gemäß einem oder mehreren der Ansprüche 1 bis 4, gemeinsam oder getrennt im Vorauflauf, Nachauflauf oder im Vor- und Nachauflauf auf die Pflanzen, Pflanzenteile, Pflanzensamen oder die Anbaufläche appliziert.

## Claims

1. The use of herbicide combinations for controlling harmful plants in cereal crops excluding rice and corn, wherein the herbicide combination in question has a synergistically active content of

(A) a broad-spectrum herbicide from the group of the compounds consisting of compounds of the formula (A1),

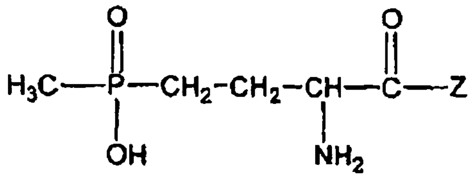

(A1)

in which Z is a radical of the formula -OH or a peptide radical of the formula $-NHCH(CH_3)CONHCH(CH_3)COOH$, and their salts,
and
(B) a herbicide from the group of the compounds which consists of

(B1) foliar-acting and/or soil-acting (residual action) herbicides which are effective selectively in cereals, particularly against monocotyledonous harmful plants, from the group consisting of isoproturon, fluthiamide, prosulfocarb, pendimethalin, fenoxaprop-P, fenoxaprop, clodinafop, diclofop and flupyrsulfuron,
(B2) predominantly foliar-acting herbicides which are effective selectively in cereals against monocotyledonous and dicotyledonous harmful plants, from the group consisting of metsulfuron and sulfosulfuron,
(B3) foliar- and soil-acting herbicides which are effective selectively in cereals against dicots and monocots, from the group consisting of diflufenican/flurtamone, metosulam and flumetsulam and
(B4) foliar-acting herbicides which are effective selectively in cereals against monocotyledonous and dicotyledonous harmful plants, from the group consisting of

(B4.1) tribenuron, thifensulfuron, prosulfuron and cinidon-ethyl and
(B4.2) herbicides of the growth hormone type from the group consisting of 2,4-D, CMPP-P, dichlorprop, MCPA, fluroxypyr, dicamba, bentazone and clopyralid and
(B4.3) hydroxybenzonitriles/photosynthesis inhibitors from the group consisting of bromoxynil, ioxynil and metribuzin and
(B4.4) PPO inhibitors from the group consisting of carfentrazone(-ethyl), pyraflufen and fluoroglycofen and
(B4.5) HPPDO inhibitors from the group consisting of picolinafen, aclonifen, isoxaflutole, clomazone, sulcotrione and mesotrione,

and the cereal crops are tolerant to the herbicides (A) and (B) contained in the combination, if appropriate in the presence of safeners.

**2.** The use as claimed in claim 1, wherein glufosinate-ammonium is employed as active substance (A).

**3.** The use as claimed in either of claims 1 and 2, wherein the herbicide combination comprises other crop protection active ingredients.

**4.** The use as claimed in any of claims 1 to 3, wherein the herbicide combination comprises adjuvants and formulation auxiliaries conventionally used in crop protection.

**5.** A method of controlling harmful plants in tolerant cereal crops excluding rice and corn, which comprises applying the herbicides of the herbicide combination, as defined in one or more of claims 1 to 4, jointly or separately, pre-emergence, post-emergence or pre- and post-emergence to the plants, parts of the plants, seeds of the plants or the area under cultivation.

## Revendications

**1.** Utilisation de combinaisons d'herbicides pour la lutte contre les plantes adventices dans les cultures de céréales, à l'exception du riz et du maïs, **caractérisée en ce que** la combinaison herbicide concernée présente une teneur synergique efficace en

(A) un herbicide avec un large spectre d'efficacité pris dans le groupe des composés comprenant des composés de la formule (A1),

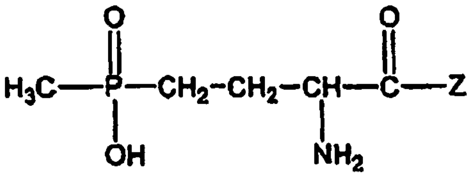

(A1)

où Z représente un reste de formule -OH et un reste peptidique de la formule

$$-NHCH(CH_3)CONHCH(CH_3)COOH$$

et leurs sels,
et
(B) un herbicide pris dans le groupe des composés comprenant

(B1) les herbicides sélectivement efficaces dans les céréales en particulier contre les plantes adventices monocotylédones, avec un effet foliaire et/ou au sol (effet résiduaire) pris dans le groupe comprenant isoproturon, fluthiamide, prosulfocarb, pendimethalin, fenoxaprop-P, fenoxaprop, clodinafop, diclofop et flupyrsulfuron,
(B2) les herbicides sélectivement efficaces dans les céréales contre les plantes adventices monocotylédones et dicotylédones, avec un effet principalement foliaire, pris dans le groupe comprenant metsulfuron et sulfosulfuron
(B3) les herbicides sélectivement efficaces dans les céréales contre les plantes adventices monocotylédones et dicotylédones, avec un effet foliaire et au sol, pris dans le groupe comprenant diflufenican/flurtamone, metosulam et flumetsulam et
(B4) les herbicides sélectivement efficaces dans les céréales contre les plantes adventices monocotylédones et dicotylédones avec un effet foliaire pris dans le groupe comprenant
(B4. 1) tribenuron, thifensulfuron, prosulfuron et cinidon-éthyl et
(B4.2) herbicides de type régulateurs de croissance pris dans le groupe comprenant 2,4-D, CMPP-P, dichlorprop, MCPA, fluroxypyr, dicamba, bentazone et clopyralid et
(B4.3) hydroxybenzonitriles/inhibiteurs de la photosynthèse pris dans le groupe comprenant bromoxynil, ioxynil et metribuzin, et
(B4.4) inhibiteurs du PPO pris dans le groupe comprenant carfentrazone(-éthyl), pyraflufen et fluoroglycofen et
(B4.5) inhibiteurs HPPDO pris dans le groupe comprenant picolinafen, aclonifen, isoxaflutole, clomazone, sulcotrione et mesotrione,
et **en ce que** les cultures de céréales sont tolérantes aux herbicides (A) et (B) contenus dans la combinaison, éventuellement en présence d'antidotes.

**2.** Utilisation selon la revendication 1, **caractérisée en ce qu'**on utilise en tant que matière active (A) le glufosinate-ammonium.

**3.** Utilisation selon l'une des revendications 1 ou 2, **caractérisée en ce que** la combinaison herbicide renferme d'autres matières actives phytosanitaires.

**4.** Utilisation selon l'une des revendications 1 à 3, **caractérisée en ce que** la combinaison herbicide renferme des adjuvants et adjuvants de formulation usuels dans le domaine phytosanitaire.

**5.** Procédé pour la lutte contre les plantes adventices dans les cultures de céréales tolérantes, à l'exception du riz et du maïs, **caractérisé en ce qu'**on applique les herbicides de la combinaison herbicide, définie selon une ou plusieurs des revendications 1 à 4, conjointement ou séparément en prélevée, en post-levée, ou en prélevée et en post-levée, aux plantes, aux parties de plantes, aux grains de plantes ou à la surface cultivable.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 98109525 A
- US 4671819 A
- US 5183492 A
- EP 496701 A
- WO 9809525 A
- DE 2856260 A
- WO 92108353 A
- EP 0252237 A
- EP 0242246 A
- EP 242236 A
- EP 257542 A
- EP 275957 A
- EP 0513054 A
- EP 0221044 A
- EP 0131624 A
- WO 9211376 A
- WO 9214827 A
- WO 9119806 A
- EP 0257993 A
- US 5013659 A
- EP 0142924 A
- EP 0193259 A
- WO 9113972 A
- EP 0476555 A
- EP 0048436 A
- EP 0336151 A
- US 4400196 A
- EP 0502014 A


### In der Beschreibung aufgeführte Nicht-Patentliteratur


- The Pesticide Manual. British Crop Protection Council, 1997, 643-645
- The Pesticide Manual. British Crop Protection Council, 1997, 120-121
- *AG Chem New Compound Review,* 1999, vol. 17, 26
- *AG Chem New Compound Review,* 1999, vol. 17, 35
- *WSSA Abstracts,* 1999, vol. 39, 65-66
- **Sambrook et al.** Molecular Cloning, A Laboratory Manual. Cold Spring Harbor Laboratory Press, 1989
- **Winnacker.** Gene und Klone. VCH, 1996
- **Christou.** *Trends in Plant Science,* 1996, vol. 1, 423-431
- **Braun et al.** *EMBO J.,* 1992, vol. 11, 3219-3227
- **Wolter et al.** *Proc. Natl. Acad. Sci. USA,* 1988, vol. 85, 846-850
- **Sonnewald et al.** *Plant J.,* 1991, vol. 1, 95-106
- **Winnacker-Küchler.** Chemische Technologie. C. Hauser Verlag, 1986, vol. 7
- **van Valkenburg.** Pesticide Formulations. Marcel Dekker, 1973
- **K. Martens.** Spray Drying Handbook. G. Goodwin Ltd, 1979
- **Watkins.** Handbook of Insecticide Dust Diluents and Carriers
- **H.v. Olphen.** Introduction to Clay Colloid Chemistry. J. Wiley & Sons
- Solvents Guide. Interscience, 1950
- **McCutcheon's.** Detergents and Emulsifiers Annual. MC Publ. Corp,
- **Sisley ; Wood.** Encyclopedia of Surface Active Agents. Chem. Publ. Co. Inc, 1964
- **Schönfeldt.** Grenzflächenaktive Äthylenoxidaddukte. Wiss. Verlagsgesellschaft, 1976
- **Winnacker-Küchler.** *Chemische Technologie,* 1986, vol. 7
- Factors Affecting Herbicidal Activity and Selectivity. *Proc. EWRS Symp.,* 1988, 227-232
- **S. R. Colby.** *Weeds,* 1967, vol. 15, 20-22